# EUROPEAN PATENT SPECIFICATION

(11) **EP 3 933 075 B1**
(45) Date of publication and mention of the grant of the patent: **10.12.2025**
(21) Application number: 19918220.5
(22) Date of filing: 01.03.2019
(51) Int. Cl.: C25D 11/34, F16C 33/12, F16C 33/14

(54) **METHOD FOR PROCESSING SURFACE OF STEEL MEMBER**
VERFAHREN ZUR OBERFLÄCHENBEHANDLUNG VON STAHLTEILEN
PROCÉDÉ DE TRAITEMENT DE SURFACE D'ÉLÉMENT EN ACIER

(43) Date of publication of application: 05.01.2022
(73) Proprietor: Schaeffler Technologies AG & Co. KG, 91074 Herzogenaurach (DE)
(72) Inventor: WEI, Jianfei, Shanghai 201805 (CN); ZHANG, Zhenyan, Shanghai 200333 (CN); SCHORN, Silvia, 96231 Bad Staffelstein (DE); HAAG, Bertram, 91486 Uehlfeld (DE); MANGOLD, Andreas, 97638 Mellrichstadt (DE); YE, Shenghua, Kunshan, Jiangsu 215399 (CN)
(74) Representative: Schaeffler Technologies
(86) International application number: PCT/CN2019/076702
(87) International publication number: WO 2020/177016

(56) References cited:
- CN-A- 101 701 349
- CN-A- 101 775 635
- CN-A- 103 088 358
- CN-A- 103 088 375
- CN-A- 85 101 608
- IT-B- 1 143 523
- JP-A- 2011 058 032
- US-A- 3 275 536
- US-A1- 2008 169 200
- STADLER KENRED: "Benefits of using black oxidized bearings in wind applications - BEARING NEWS", 9 September 2015 (2015-09-09), pages 1 - 11, XP055959378, Retrieved from the Internet <URL:https://www.bearing-news.com/benefits-of-using-black-oxidized-bearings-in-wind-applications/> [retrieved on 20220909]

## Description

### TECHNICAL FIELD

The present invention relates to a method for processing surface of a steel member, in particular to a method for processing the surface of a steel bearing.

### BACKGROUND

White-Etching Cracks are an irregular change in the microstructure that occurs on the bearing subsurface material, which often causes spalling and cracks of the bearing and leads to premature bearing failure. Bearing failures caused by the white-etching cracks have been extensively studied, but the specific causes are unknown. Among those causes, the most probable cause is that hydrogen elements intrude into the raceway of bearing steel, so that the rolling fatigue strength of the bearing steel is reduced by the hydrogen elements.

A black oxide coating, also known as a "black coating" or "bluing coating" in the industry, can effectively reduce the intrusion of the hydrogen elements into the raceway of the steel bearing.

In the prior art, the black oxide coating is formed typically by chemical black oxidation, of which the specific process is as follows: using sodium hydroxide, sodium nitrate and/or sodium nitrite, and an additive to prepare a chemical black oxidation solution, and processing the surface of the steel bearing part with the chemical black oxidization solution at 135°C - 150°C for 10 - 40 minutes. The black oxide coating with a magnetite deposit (Fe₃O₄) as the main component can be obtained by the method described above. However, the method also has the following defects: the chemical black oxide solution is complicated in composition and difficult to be prepared; during the process, a high temperature state needs to be maintained, resulting in a high energy consumption; a large amount of water vapor is generated during the process, meanwhile, water and chemical components in the chemical black oxidization solution need to be supplemented timely during the process, and the operation related risk is high; partial coating is difficult to be carried out, etc.

US 2008 0 169 200 A1 discloses a method of anodizing steel. A steel object is connected to a positive terminal and a counter electrode to a negative terminal of a power supply. The steel object and the counter electrode are placed in a solution of KOH or NaOH and a voltage is applied to anodize the steel object.

US 3 275 536 A1 discloses a method of forming a brown coating on steel articles. The steel articles are subjected to electrolysis as anode in a solution consisting essentially of water, alkali-metal hydroxide and a reagent while maintaining said solution at a temperature of from 115 to 145 °C. The document "Benefits of using black oxidized bearings in wind applications" published at https://www.bearing-news.com/ benefits-of-using-black-oxidized-bearings-in-wind-applications/ discloses a steel bearing with a black oxide layer on its surface. The layer is obtained by a chemical oxidation surface reaction at the surface layer of the steel bearing in an aqueous alkaline solution

### SUMMARY

### Problems to be solved by the invention

The present invention has been made in view of the problems of the prior art described above. The object of the present invention is to provide a method for processing the surface of a steel member that can solve the technical problems described above, and the steel member.

### Solutions to the problems

The present invention provides a method for processing the surface of a steel member to achieve a partial or full oxidation of the processed surface of the steel member and to form a dense and uniform oxide layer, including the following steps: cleaning the surface of the steel member;
connecting the steel member to the positive electrode of a power supply, connecting a conductor electrode to the negative electrode of the power supply, and immersing the same in electrochemical oxidation solution for processing;
applying current by the power supply;
wherein the electrochemical oxidation solution contains an alkali metal hydroxide is dissolved in the electrochemical oxidation solution and one or more of an oxidant, a chelating agent and a surfactant, and wherein the concentration of the alkali metal hydroxide in the electrochemical oxidation solution is in the range of 200 to 1100 g/l, and wherein the oxidant is selected from one or more of sodium nitrate, sodium nitrite, molybdate, vanadate, tungstate and perchlorate, and the concentration of the oxidant in the electrochemical oxidation solution is in the range of 30 to 300 g/l.

The method is characterized in that the steel member is in the form of a bearing part, in that the chelating agent is selected from one or more of sulfite, bisulfite, thiosulfate, oxalate, tartrate, lactic acid and citrate, and the concentration of the chelating agent in the electrochemical oxidation solution is in the range of 0.5 to 15 g/l, and in that the surfactant is selected from sodium alkylbenzene sulfonate, and the concentration of the surfactant in the electrochemical oxidation solution is in the range of 0.5 to 10 g/l.

According to the processing method mentioned in the present invention, the alkali metal hydroxide is sodium hydroxide and/or potassium hydroxide.

According to the processing method mentioned in the present invention, the current density during the process is 0.1 - 10000 mA/dm².

According to the processing method mentioned in the present invention, the surface of the steel member is partially or fully immersed in the electrochemical oxidation solution for processing.

The processed surface of the steel member in the form of a bearing part is preferably lubricated with hydrogen-containing lubricating oil or grease..

### Effects of the invention

The electrochemical oxidation solution of the present invention has a simpler composition than that of a traditional chemical black oxidation solution, and is easy to be prepared. Due to low temperature during the process, it saves the energy and reduces the evaporation of water and the frequency to supplement water, as well as provides high level of safety. It can achieve partial or full oxidation of the surface of the steel member to form a dense and uniform oxide layer, which can effectively block the intrusion of hydrogen elements, reduce the amount of hydrogen in the steel member that enters into the material matrix, and prevent failure due to white-etching cracks.

### BRIEF DESCRIPTION OF THE DRAWINGS

FIG. 1 shows a schematic diagram of the processing method of the present invention, in which: 1. Electrochemical Oxidation Solution; 2. Anode; 3. Cathode; 4. Cations; 5. Binding Molecules; 6. Anions.
FIG. 2 shows a SE-SEM test image of the surface of the steel member obtained in Example 1 of the present invention.
FIG. 3 shows a BSE-SEM test image of the surface of the steel member obtained in Example 1 of the present invention.

### DETAILED DESCRIPTION OF EMBODIMENTS

Exemplary embodiments of the present invention will be described below. It should be understood that the specific descriptions are only used to teach those skilled in the art how to implement the present invention rather than to be intended to be exhaustive of all possible variations of the present invention, and limit the scope of the present invention.

The present invention provides a method for processing the surface of a steel member, wherein a partial or full oxidation of the processed surface of the steel member is achieved and a dense and uniform oxide layer is formed, including the following steps:
cleaning the surface of the steel member;
connecting the steel member to the positive electrode of a power supply, connecting a conductor electrode to the negative electrode of the power supply, and immersing the same in electrochemical oxidation solution for processing;
applying current by the power supply;
wherein the electrochemical oxidation solution contains an alkali metal hydroxide dissolved in the electrochemical oxidation solution and one or more of an oxidant, a chelating agent and a surfactant, and wherein the concentration of the alkali metal hydroxide in the electrochemical oxidation solution is 200 - 1100 g/l.

Preferably, the cleaning optionally comprises the following steps:
(1) Degreasing: the surface of the steel member is degreased with a degreasing solution, which can effectively remove oil or grease on the surface of the steel member and facilitate the removal of oxide scale on the surface of the steel member in the subsequent acid pickling process and the subsequent formation of oxide layers.

Preferably, the degreasing solution contains components selected from one or more of sodium hydroxide, sodium carbonate, and sodium silicate.

After degreasing, necessary water washing is carried out to avoid residues from contaminating the surface of the steel member.

(2) Ultrasonic degreasing: ultrasonic degreasing is adopted for degreasing the steel member, especially some parts of the steel member with a complicated structure, such as the corners, pores, blind holes, and inner walls of cavity, etc., and ultrasonic degreasing exhibits a low corrosivity to the steel member.

After ultrasonic degreasing, it is preferably to carry out the water washing process more than twice to avoid residues from contaminating the surface of the steel member.

(3) Acid pickling: the surface of the steel member is subjected to acid pickling to remove the oxide scale, and the like from the surface of the steel member, so as to make the surface clean and facilitate the subsequent formation of the oxide layers.

However, acid pickling may cause corrosion and change the microtopography of the surface, and also may lead to hydrogen permeation, which may affect the service life of the steel member. For workpieces with good surface conditions, acid pickling is preferably not used.

If acid pickling is carried out, hydrochloric acid or sulfuric acid is preferably used in combination with the corresponding common corrosion inhibitor for acid pickling.

After acid pickling, it is preferably to carry out the water washing process more than twice to avoid corrosion and contamination to the surface of the steel member caused by residues.

(4) Hot water washing: after acid pickling, the surface of the steel member is optionally washed by hot water during secondary water washing. Hot water washing can be used to wash the surface of the steel member, and also allows the steel member to have a certain initial temperature before entering an blackening tank, so that the temperature of the liquid in the blackening tank is prevented from changing greatly after the steel member entering the blackening tank. Therefore, hot water washing is preferably carried out.

If hot water washing is not carried out, the time required for the temperature of the liquid in the blackening tank to recover to the process temperature can be prolonged, thereby affecting the blackening quality of the product. If the temperature of the blackening tank is reduced greatly, the number of meshed microcracks can be increased after blackening, finally affecting the service life of the product.

Preferably, the temperature for hot water washing is 70°C - 80°C, and the time for immersing is 1 - 2 minutes.

As shown in FIG. 1, after cleaning the surface of the steel member, the steel member is connected to the positive electrode 2 of a power supply, and a conductor electrode is connected to the negative electrode 3 of the power supply, and all of them are immersed in the electrochemical oxidation solution 1 for processing to form an oxide layer on the surface of the steel member.

The formed oxide layer is an effective barrier layer for hydrogen permeation and thus can reduce the amount of hydrogen intruded into the steel member through the surface during the use of the steel member.

Preferably, the concentration of the alkali metal hydroxide in the electrochemical oxidation solution is 480 - 700 g/l.

Preferably, the alkali metal hydroxide is sodium hydroxide and/or potassium hydroxide.

There is no particular limitation on the conductor electrode. Preferably, the conductor electrode is made of corrosion-resistant materials, such as a steel plate or nickel plate.

Preferably, the power supply is selected as a direct current power supply or a pulse power supply.

Preferably, the current density during the process is 0.5 - 3 A/dm².

Preferably, the surface of the steel member is partially or fully immersed in the electrochemical oxidation solution for processing. More preferably, regarding parts of the bearing, such as an inner ring, an outer ring and a cage, the surface of a layer to be blackened is immersed in the electrochemical oxidation solution for processing to form an oxide layer. The parts of the bearing are typically lubricated with hydrogen-containing lubricating oil or grease during assembly and use. Under special working conditions, such as sliding, vibration, electric working conditions, or water intrusion into lubricating oil or grease, active hydrogen will be generated and enter the raceway of the bearing. If the raceway has an oxide layer thereon, the hydrogen entering the raceway will be blocked by the oxide layer. However, the oxide layer sometimes can act as a barrier layer for the hydrogen to leave the bearing. Therefore, the oxide layer partially formed on the surface of the raceway helps to block hydrogen from entering the bearing and promote hydrogen to leave the bearing, which will prevent the occurrence of White-Etching Cracks more effectively.

The electrochemical oxidation solution further contains one or more of an oxidant, a chelating agent and a surfactant. The oxide layer can be formed more efficiently if the electrochemical oxidation solution contains one or more of the oxidant, the chelating agent and the surfactant. Preferably, the concentration of the oxidant in the electrochemical oxidation solution is in the range of 70 - 150 g/l.Preferably, the concentration of the chelating agent in the electrochemical oxidation solution is in the range of 0.5 - 10 g/l.Preferably, the concentration of the surfactant in the electrochemical oxidation solution is in the range of 0.5 - 3 g/l.

Preferably, after the above-mentioned processing, it is preferably to carry out the water washing process more than twice to avoid corrosion and contamination to the surface of the steel member caused by residues.

More preferably, hot water washing is carried out after performing the water washing process for more than twice, followed by drying.

Further preferably, after drying, oil immersing process is carried out to improve the corrosion resistance of the steel member. The oil may be DW30X, BIG 21, or the like.

A steel bearing lubricated with hydrogen-containing lubricating oil or grease comprising steel members in the form of bearing parts is of advantage. The surface of the steel members is processed according to the processing method of the present invention.

### EXAMPLES

### Example 1

A bearing part made of medium carbon steel is selected. Degreasing, water washing, ultrasonic degreasing, secondary water washing, and hot water washing are carried out on the surface of the bearing part in sequence. Then, the bearing part is connected to the positive electrode 2 of a power supply, and a conductor electrode is connected to the negative electrode 3 of the power supply, and all of them are immersed in the electrochemical oxidation solution 1 for processing to form an oxide layer on the surface of the bearing part.

After that, secondary water washing and hot water washing are carried out on the surface of the bearing part on which the oxide layer is formed. Finally, drying and oil immersing process are carried out, and the resulting bearing part is denoted as bearing part - Example 1.

All of the above-mentioned process are carried out under the following conditions: the electrochemical oxidation solution 1 comprises: 650 g/l of sodium hydroxide (NaOH), and 147 g/l of sodium nitrite (NaNO₂) as oxidant; conventional steel plate is used as a cathode material; the test piece is connected to the anode; the distance between the anode and the cathode is about 10 cm; the temperature of the solution is 90°C; the process time is 10 minutes; and the current density is 0.5 A/dm².

### Comparative Example 1

A bearing part made of medium carbon steel is selected. Degreasing, water washing, ultrasonic degreasing, secondary water washing, and hot water washing are carried out on the surface of the bearing part in sequence. The bearing part is immersed in a chemical black oxidization solution for processing at 90°C for 10 minutes, without using current.

The chemical black oxidization solution comprises: 650 g/l of sodium hydroxide (NaOH), and 147 g/l of sodium nitrite (NaNO₂) as oxidant. The resulting bearing part is denoted as bearing part - Comparative Example 1.

### Comparative Example 2

The process is carried out in the same manner as in Comparative Example 1, wherein the process temperature is 147°C and the process time is 10 minutes. The resulting bearing part is denoted as bearing part - Comparative example 2.

### Comparative Example 3

The process is carried out in the same manner as in Comparative Example 1, wherein the process temperature is 147°C and the process time is 20 minutes. The resulting bearing part is denoted as bearing part - Comparative Example 3.

### Performance Testing

Appearance test: the processed surface of the bearing part is observed through SE-SEM and BSE-SEM.

Adhesion test: the test is carried out according to DIN50983.

Corrosion resistance test: the processed surface of the bearing part is immersed in the copper sulfate solution (5% by mass) for 2 minutes for testing.

### Test Results

As shown in FIG. 2 and FIG. 3, the oxide layer obtained in Example 1 is uniform and dense. In addition, after the rinsing process, the bearing part is wiped with a white cloth, and no other residues are left on the white cloth.

In contrast, almost no oxide layer is obtained in Comparative Example 1. In the adhesion test, after the rinsing process, the bearing part is wiped with a white cloth, and other residues are left on the white cloth.

Moreover, after the oxide layer obtained in Example 1 is tested with a copper sulfate solution for 3 - 5 minutes, no copper precipitates exist, and the oxide layer has good corrosion resistance.

In contrast, copper is precipitated out 2 minutes after the bearing parts in Comparative Example 1 and Comparative Example 2 being subjected to the copper sulfate test, and the corrosion resistance is poor.

In Comparative Example 3, following the rinsing process, although after the bearing part being wiped with a white cloth, no other residues exist on the white cloth, and copper is precipitated out 2 minutes after the copper sulfate test, but the process time is long, the process temperature is high, and the risk and the cost are higher.

However, the method of Example 1 requires lower process temperature and shorter time, which saves the energy, reduces the evaporation of water and the frequency to supplement water, as well as provides high level of safety.

The test results of Example 1 and Comparative Examples 1 - 3 are shown in Table 1 below:

**Table 1**

| Tests | Test conditions | | | | | Test results | | |
|---|---|---|---|---|---|---|---|---|
| | NaOH concentration (g/l) | NaNO₂ concentration (g/l) | Temperature (°C) | Current density (A/dm²) | Time (min) | Appearance | Adhesion test | Copper sulfate test |
| Example 1 | 650 | 147 | 90 | 0.5 | 10 | qualified | qualified | qualified |
| Comparative Example 1 | 650 | 147 | 90 | no current | 10 | unqualified | unqualified | unqualified |
| Comparative Example 2 | 650 | 147 | 147 | no current | 10 | unqualified | qualified | unqualified |
| Comparative Example 3 | 650 | 147 | 147 | no current | 20 | qualified | qualified | qualified |

It should be understood that the foregoing embodiments are only exemplary and are not intended to limit the present invention. Those skilled in the art can make various modifications and changes to the foregoing embodiments under the teaching of the present invention without departing from the scope of the present invention.

## Claims

1. A method for processing of the surface of a steel member to achieve a partial or full oxidation of the processed surface of the steel member and to form a dense and uniform oxide layer, including the following steps:
cleaning the surface of the steel member;
connecting the steel member to the positive electrode (2) of a power supply, connecting a conductor electrode to the negative electrode (3) of the power supply, and immersing the same in electrochemical oxidation solution (1) for processing;
applying current by the power supply;
wherein the electrochemical oxidation solution (1) contains an alkali metal hydroxide dissolved in the electrochemical oxidation solution (1) and one or more of an oxidant, a chelating agent and a surfactant, and wherein the concentration of the alkali metal hydroxide in the electrochemical oxidation solution (1) is in the range of 200 to 1100 g/l, and
wherein the oxidant is selected from one or more of sodium nitrate, sodium nitrite, molybdate, vanadate, tungstate and perchlorate, and the concentration of the oxidant in the electrochemical oxidation solution is in the range of 30 to 300 g/l,
**characterized in that** the steel member is in the form of a bearing part,
**in that** the chelating agent is selected from one or more of sulfite, bisulfite, thiosulfate, oxalate, tartrate, lactic acid and citrate, and the concentration of the chelating agent in the electrochemical oxidation solution is in the range of 0.5 to 15 g/l, and
**in that** the surfactant is selected from sodium alkylbenzene sulfonate, and the concentration of the surfactant in the electrochemical oxidation solution is in the range of 0.5 to 10 g/l.

2. The processing method according to claim 1, wherein the alkali metal hydroxide is sodium hydroxide and/or potassium hydroxide.

3. The processing method according to claim 1 or 2, wherein a current density during the process is in the range of 0.1 to 10000 mA/dm².

4. The processing method according to any one of claims 1 - 3, wherein the surface of the steel member is partially or fully immersed in the electrochemical oxidation solution for processing.

5. The processing method according to any one of claims 1 - 4, wherein the processed surface of the steel member in the form of a bearing part is lubricated with hydrogen-containing lubricating oil or grease.

## Patentansprüche

1. Verfahren zur Oberflächenbehandlung eines Stahlteils, um eine partielle oder vollständige Oxidation der behandelten Oberfläche des Stahlteils zu erreichen und eine dichte und gleichmäßige Oxidschicht zu bilden, das die folgenden Schritte umfasst:
Reinigen der Oberfläche des Stahlteils;
Verbinden des Stahlteils mit der positiven Elektrode (2) einer Stromversorgung, Verbinden einer Leiterelektrode mit der negativen Elektrode (3) der Stromversorgung und Eintauchen desselben in eine elektrochemische Oxidationslösung (1) zur Behandlung;
Anlegen von Strom durch die Stromversorgung;
wobei die elektrochemische Oxidationslösung (1) ein in der elektrochemischen Oxidationslösung (1) gelöstes Alkalimetallhydroxid und eines oder mehrere von einem Oxidationsmittel, einem Chelatbildner und einem Tensid enthält und wobei die Konzentration des Alkalimetallhydroxids in der elektrochemischen Oxidationslösung (1) im Bereich von 200 bis 1100 g/l liegt, und
wobei das Oxidationsmittel aus einem oder mehreren von Natriumnitrat, Natriumnitrit, Molybdat, Vanadat, Wolframat und Perchlorat ausgewählt ist und die Konzentration des Oxidationsmittels in der elektrochemischen Oxidationslösung im Bereich von 30 bis 300 g/l liegt,
**dadurch gekennzeichnet, dass** das Stahlteil in Form eines Lagerteils vorliegt,
dass der Chelatbildner aus einem oder mehreren von Sulfit, Bisulfit, Thiosulfat, Oxalat, Tartrat, Milchsäure und Citrat ausgewählt ist und die Konzentration des Chelatbildners in der elektrochemischen Oxidationslösung im Bereich von 0,5 bis 15 g/l liegt und
dass das Tensid aus Natriumalkylbenzolsulfonat ausgewählt ist und die Konzentration des Tensids in der elektrochemischen Oxidationslösung im Bereich von 0,5 bis 10 g/l liegt.

2. Behandlungsverfahren nach Anspruch 1, wobei das Alkalimetallhydroxid Natriumhydroxid und/oder Kaliumhydroxid ist.

3. Behandlungsverfahren nach Anspruch 1 oder 2, wobei die Stromdichte während des Prozesses im Bereich von 0,1 bis 10000 mA/dm² liegt.

4. Behandlungsverfahren nach einem der Ansprüche 1 bis 3, wobei die Oberfläche des Stahlteils zur Behandlung teilweise oder vollständig in die elektrochemische Oxidationslösung eingetaucht wird.

5. Behandlungsverfahren nach einem der Ansprüche 1 bis 4, wobei die behandelte Oberfläche des Stahlteils in Form eines Lagerteils mit wasserstoffhaltigem Schmieröl oder -fett geschmiert wird.

## Revendications

1. Procédé de traitement de la surface d'un élément en acier pour obtenir une oxydation partielle ou totale de la surface traitée de l'élément en acier et pour former une couche d'oxyde dense et uniforme, comportant les étapes suivantes :
nettoyage de la surface de l'élément en acier ;
connexion de l'élément en acier à l'électrode positive (2) d'une alimentation électrique, connexion d'une électrode conductrice à l'électrode négative (3) de l'alimentation électrique et immersion de celle-ci dans une solution d'oxydation électrochimique (1) pour le traitement ;
application de courant par l'alimentation électrique ;
dans lequel la solution d'oxydation électrochimique (1) contient un hydroxyde de métal alcalin dissous dans la solution d'oxydation électrochimique (1) et un ou plusieurs éléments parmi un oxydant, un agent chélatant et un tensioactif, et dans lequel la concentration d'hydroxyde de métal alcalin dans la solution d'oxydation électrochimique (1) est comprise dans la plage de 200 à 1100 g/l, et
dans lequel l'oxydant est choisi parmi un ou plusieurs éléments parmi le nitrate de sodium, le nitrite de sodium, le molybdate, le vanadate, le tungstate et le perchlorate, et la concentration de l'oxydant dans la solution d'oxydation électrochimique est comprise dans la plage de 30 à 300 g/l,
**caractérisé en ce que** l'élément en acier se présente sous la forme d'une pièce de palier,
**en ce que** l'agent chélatant est choisi parmi un ou plusieurs éléments parmi le sulfite, le bisulfite, le thiosulfate, l'oxalate, le tartrate, l'acide lactique et le citrate, et la concentration de l'agent chélatant dans la solution d'oxydation électrochimique est comprise dans la plage de 0,5 à 15 g/l, et
**en ce que** le tensioactif est choisi parmi l'alkylbenzène sulfonate de sodium, et la concentration du tensioactif dans la solution d'oxydation électrochimique est comprise dans la plage de 0,5 à 10 g/l.

2. Procédé de traitement selon la revendication 1, dans lequel l'hydroxyde de métal alcalin est l'hydroxyde de sodium et/ou l'hydroxyde de potassium.

3. Procédé de traitement selon la revendication 1 ou 2, dans lequel une densité de courant pendant le processus est comprise dans la plage de 0,1 à 10 000 mA/dm².

4. Procédé de traitement selon l'une quelconque des revendications 1 à 3, dans lequel la surface de l'élément en acier est partiellement ou totalement immergée dans la solution d'oxydation électrochimique pour le traitement.

5. Procédé de traitement selon l'une quelconque des revendications 1 à 4, dans lequel la surface traitée de l'élément en acier sous la forme d'une pièce de palier est lubrifiée avec de l'huile ou de la graisse lubrifiante contenant de l'hydrogène.
